# EUROPEAN PATENT APPLICATION

(11) **EP 2 879 415 A1**
(43) Date of publication of application: **03.06.2015**
(21) Application number: 13382488.8
(22) Date of filing: 02.12.2013
(51) Int. Cl.: H04W 4/16, H04W 4/18

(54) **Delivery of content over a network**

(71) Applicant: Vodafone IP Licensing Limited, The Connection Newbury Berkshire RG14 2FN (GB); Vodafone España, S.A.U., 28108 Alcobendas (ES)
(72) Inventor: Riesco Fernandez, Marco, 28150 MADRID (ES); Martinez Perea, Rogelio, 28150 MADRID (ES); Dominguez, Gonzales, Rafael, 28150 MADRID (ES)
(74) Representative: Boult Wade Tennant

(57) **Abstract**

A method and apparatus for facilitating delivery of content over a telecommunication network is described. Specifically, the method comprises receiving content to be delivered from a first device associated with the network to at least one second device associated with the network, and triggering by a server a call (e.g., a terminating call) to the at least one second device, said call allowing the at least second device to obtain the content when the call is accepted at the at least second device

## Description

### Technical Field of the Invention

The invention concerns a method and apparatus for facilitating delivery of content over a telecommunication network.

### Background to the Invention

In nowadays communication environments the ability of sharing information with friends, colleagues, partners, clients, etc. is becoming more and more important. This, coupled with the increased mobility of people, the need and willingness for interacting in a faster, quicker and simpler manner, and other factors, has resulted in an increased sharing of files, for example multimedia files such as audio, video, pictures, etc.

Users expect to be able to communicate without undue burden and in a simple, quicker, almost intuitive way. In the current market, there exist a number of some applications or mechanisms that allow sharing audio recordings and similar multimedia files so that a person or a group of persons can download/play them. For example, a user can record audio and decide to send it to a group of friends. This action is translated into a notification of audio received in the recipient applications. Receiver user must click on audio received icon in order to actually download the audio.

There are drawbacks with existing applications. Firstly, it requires that both the device of the sender and the device of the receiver have the relevant application installed and running on the respective device. In other words, if the device of the recipient does not have the application, the sharing is not possible. This severely limits the capability of sharing multimedia files, as well as adversely affecting the user experience. Secondly, data transmitted over a telecommunication network are usually associated with a data plan, which often includes an allowance for calls (call allowance), an allowance for messages (message allowance) and an allowance for data (data allowance). Data allowance is often more limited than message allowance and/or call allowance. Therefore, sending and/or receiving data over a network is usually associated with a data tariff and a corresponding data allowance. Thus, by sending and/or receiving multimedia files using these applications, users will be "consuming" their data allowance.

Is it therefore important to provide a solution that facilitates delivery of content over a telecommunication network between users of the telecommunication network.

### Summary of the Invention

Against this background and in a first aspect, the present invention provides a method for facilitating delivery of content over a telecommunication network. The method comprises receiving content to be delivered from a first device associated with the network to at least one second device associated with the network. Further, the method comprises triggering by a server a call to the at least one second device, said call allowing the at least second device to obtain the content when the call is accepted at the at least second device. The call may be a terminating call, or any suitable/equivalent type of call. For example, it may be a call that is converted into a terminating call after it has been launched (e.g., by the server and/or the first device). The delivery may be made over an IP-based network (e.g., IP Multimedia Subsystem - IMS - network), which can be part of the telecommunication network. The server itself may be an IMS-based server. The at least one second device may include, for example: one or more devices associated with different users; one or more devices associated with the same user; one or more devices belonging to a same group; and/or any combination of the above. The at least one second device may be selected by the user of the first device. The selection may be performed based on a list of contacts or a list of groups, the list contained in a database associated with the first device. For example, the list may be contained in an agenda. The triggering may be initiated only when the at least one second device (and/or the user(s) of the at least one second device) belongs to or is associated with a community which the first device (and/or the user of the first device) belongs to or is associated with. For example, the community may be a group to which (i) the first device and/or the user of the first device and (ii) the at least one second device and/or the user(s) of the at least one second device belong to or is associated with. For example, the community may be a group with whom the devices and/or the users are associated. One example of such a community is the Vodafone Yu:™ community. For example, the devices and/or the users may have similar or associated tariff plans, and hence belong to the same community. The method may further comprise determining, at the server, if the at least one second device (and/or the user(s) of the at least one second device) belongs to a community to which the first device (and/or the user of the first device) belongs, and based on this determination, deciding whether or not to trigger the call. For example, if the at least one second device (and/or the user(s) of the at least one second device) belongs to a community to which the first device (and/or the user of the first device) belongs, the server may decide to trigger the call and/or send a message to the at least one second device. If the at least one second device (and/or the user(s) of the at least one second device) does not belong to a community to which the first device (and/or the user of the first device) belongs, the server may decide to only send a message to the at least one second device without triggering the call. The message may include a link to enable obtaining/retrieving (e.g., downloading) of the content to the at least one second device.

The method may further comprise uploading the content prior to delivery to the at least one second device. The content may be uploaded directly at the server or at a storage entity associated with the server (for example, cloud storage, or a swap disk space in the server). The content may then be retrieved (and/or delivered) from the storage entity to the server before delivery to the at least one second device, or it may be retrieved (and/or delivered) directly from the storage device by the at least one second device - for example on instruction by the server. The content may be retrieved and/or delivered to the at least one second device directly from the server; or via the server; or from the storage entity associated with the server (e.g., on instructions by the server).

The content may be uploaded upon confirmation by the first device that delivery of the content is to be performed. This can be done, for example, by way of a request from the application (e.g., a pop-up window), but other ways could also be considered.

The method may further comprise generating at the first device the content to be delivered to the at least one second device.

Further, the method may comprise receiving from the first device an indication of the at least one second device to which the content is to be delivered. The indication may be based on a selection by the user of the first device.

The method may further comprise sending a notification to the first user confirming the status of the delivery.

The content may be a multimedia file, for example an audio file, a video file, a file that can be converted into audio and/or video, or any combination of the above.

In a second aspect, the present invention provides a server facilitating delivery of content over a telecommunication network, the server comprising means for receiving (e.g., receiving entity) directly or indirectly content to be delivered from a first device associated with the network to at least one second device associated with the network, and means for triggering (e.g., a triggering entity) a call to the at least one second device, said call allowing the at least second device to obtain the content when the call is accepted at the at least second device. The call may be a terminating call, or any suitable/equivalent type of call. For example, it may be a call that is converted into a terminating call after it has been launched (e.g., by the server and/or the first device). Additionally, the server may further include any combination of the relevant (and/or corresponding/complementary) functionalities and features described above in relation to the method.

In a third aspect, the present invention provides a method for facilitating delivery of content over a telecommunication network, the method comprising receiving content to be delivered from a first device associated with the network to at least one second device associated with the network; and selecting, based on (i) whether the at least one second device and/or the user of the at least one second device is associated with a group which the first device and/or the user of the first device is associated with; and/or (ii) whether the at least one second device and/or the user of the at least one second device and/or the first device and/or the user of the first device is associated with a specific active tariff, a way of delivering the content to the at least one second device. The tariff may be a tariff associated with the group. The method may include determining to which group the one second device and/or the user of the at least one second device is associated with. The determination may be performed by verifying the active tariff for the one second device and/or the user of the at least one second device. The method may include determining to which group the first device and/or the user of the first device is associated with. The determination may be performed by verifying the active tariff for the first device and/or the user of the first device. The group may be the same group (e.g., Vodafone Yu:™), or a similar group, or a group associated with the group of the first device.

If the at least one second device and/or the user of the at least one second device is associated with a group which the first device and/or the user of the first device is associated with, the selected method for deliver is a call to the at least one second device (and it may also include optionally a message to be sent to the at least one second device). If the at least one second device and/or the user of the at least one second device is not associated with a group which the first device and/or the user of the first device is associated with, the selected method for deliver is a message to the at least one second device. The message may include a link to enable obtaining/retrieving (e.g., downloading) of the content to the at least one second device.

In a fourth aspect, the present invention provides a server for facilitating delivery of content over a telecommunication network, the server comprising means for receiving (e.g., a receiving entity) content to be delivered from a first device associated with the network to at least one second device associated with the network; and means for selecting (e.g., a selecting entity), based on (i) whether the at least one second device and/or the user of the at least one second device is associated with a group which the first device and/or the user of the first device is associated with; and/or (ii) whether the at least one second device and/or the user of the at least one second device and/or the first device and/or the user of the first device is associated with a specific active tariff; a way of delivering the content to the at least one second device.

In a fifth aspect, the present invention provides an application for facilitating delivery of content over a telecommunication network, the application configured to run at a first device associated with the network, the application for use with the server as described above, the application comprising means for selecting (e.g., a selecting function, such as one or more buttons or tabs) at least one second device associated with the network, and means for initiating (e.g., an initiating function) delivery of the content to the selected at least one second device. The application of may further comprise means for generating (e.g., a recording function, such as a microphone, a camera, etc.), at the first device, the content to be delivered.

Additionally, the application may further include any combination of the relevant and/or corresponding/complementary) functionalities and features described above in relation to the method.

Additionally, a system including at least the server and the application as described above may also be provided. The system may further include the first device and/or the second device.

A computer program, configured when operated by a processor to carry out the method according to any aspect described herein, may also be provided. Programmable logic or other kinds of control logic configured to operate in accordance with any of the methods described herein may also be provided.

A combination of any features from within one aspect or between aspects is also provided, even if not explicitly discussed.

Any of the above methods, servers, apparatuses, systems, computer programs can be readily extended and/or adapted for facilitating the set-up of a conference call over a telecommunication network between the first user and two or more second users of said network, in which each user is associated with a corresponding device. Any adaptations of the above methods, servers, apparatuses, systems, computer programs that a skilled person could readily arrive to in order to implement the extended and/or adapted methods, servers, apparatuses, systems, computer programs for facilitating delivery of content over a telecommunication network are also part of the present disclosure, even if not explicitly discussed.

Some of the advantages provided by the above aspects are described below by way of example. Of course, other advantages could be easily derived, formulated or otherwise become apparent based on the content of this application, and also these advantages are included in this application.

The present invention provides easiness and simplicity in delivering the content over the telecommunication network. The recipient device (and the user of that device) is automatically enabled to obtain the content without any additional effort by simply accepting and/or answering the call from the server. This simplifies the operation at the device, the server, and in general within the network. It also optimizes the use of network resources. For example, when the content is delivered via an IP-based network, this allows resources over the non IP-based network to be freed. Moreover, delivery of the content does not affect the user data plan, as the content is delivered by receiving a call rather than direct download of the content from a server, and therefore it does not count against the user data allowance - thus saving consumption of importance allowance.

In addition, there is no need for the recipient device to have any application running on it in order to receive the content. In other words, the content can be delivered to the recipient device (as a call and/or via message) whether or not the recipient device has an application corresponding to that running on the first device from which the content was sent. This clearly enables and simplifies the sharing of content within the network, and enables devices to share content without need for further modifications (e.g., installation of applications). Further, all of the above advantages contribute to a better, simpler and more efficient user experience.

### Brief Description of the Drawings

The invention may be put into practice in various ways, some of which will now be described by way of example only and with reference to the accompanying drawings in which:
Figure 1 shows an exemplary procedure for facilitating delivery of content over a telecommunication network;
Figure 2 illustrates a block diagram of the system in accordance with the exemplary procedure; and
Figure 3 shows an exemplary flow diagram for facilitating delivery of content over a telecommunication network.

### Detailed Description of Preferred Embodiments

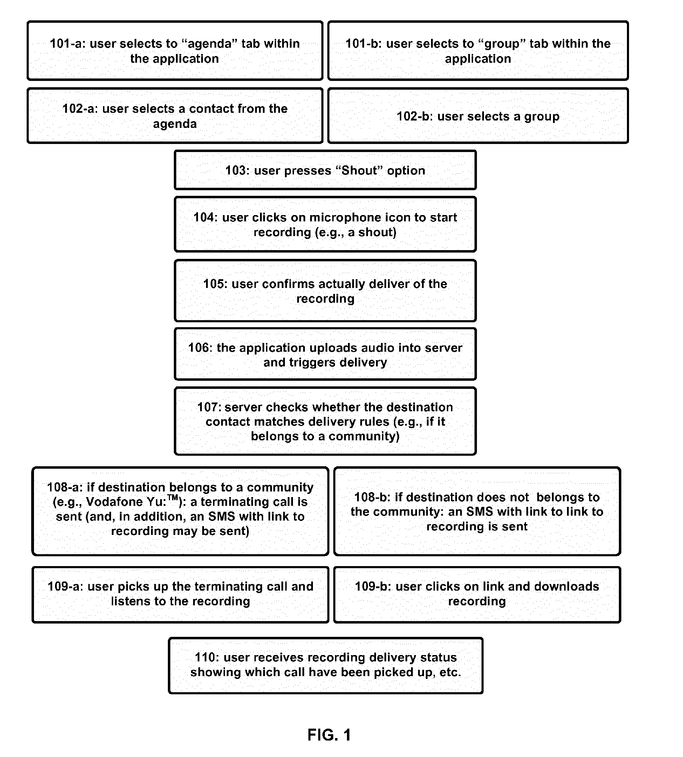

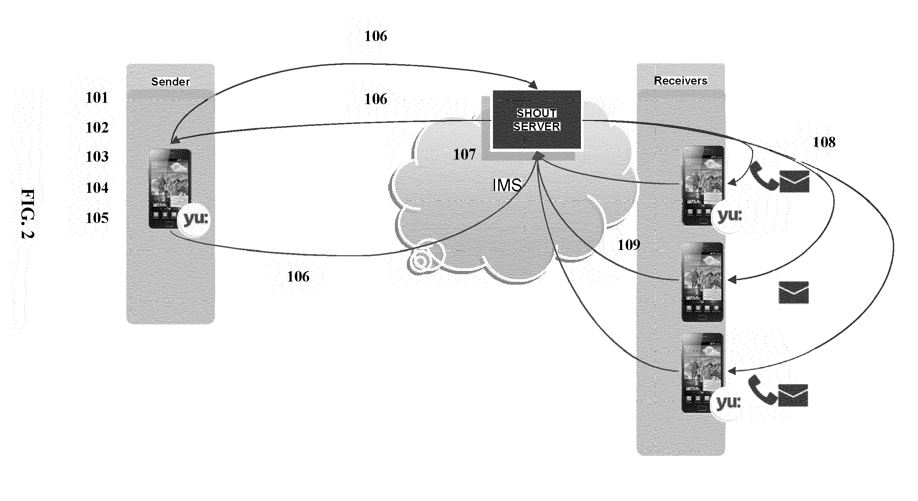

Figure 1 show an exemplary embodiment of the invention. In particular, it illustrates exemplary procedure for facilitating delivery of content over a telecommunication network. Figure 2 shows how the procedure is performed within the system. The system shown in Figure 2 includes a first device associated with a first user (e.g., the sender) and a plurality of second devices belonging to other users (e.g., the recipients, namely the devices - and/or the users associated therewith - to which the sender wishes to send the content, e.g. a recording such as a recorded audio file). The first device may belong and/or be associated with a community (e.g., Vodafone Yu:™), and some or all of the plurality of second devices may belong and/or be associated with the same community. Some or all of the plurality of second devices may belong to the same user. Further, the system includes a server (e.g., shout server). The server may sit within a telecommunication network including, for example, a Circuit Switch (CS) section (not shown) and an IP Multimedia Subsystem (IMS) section. The server may be located within the IMS and may be configured in accordance with IMS protocols and procedures. The server may be capable of communicating with the user devices using standard protocols such as SOAP, REST,SIP, RTP, SS7, ISUP, etc. (the list is not exhaustive, but it is given only for illustrative purposes. Other similar and/or equivalent protocols might be used). The server may be even part of the telecommunication network, and its functionality may be localized or distributed. The server will be associated with one or more databases and a MRF (Media Resource Function Server). The MRF provides media related functions such as media manipulation (e.g., voice stream mixing) and playing of tones and announcements.

At first, the first user (e.g., sender) is presented with some options associated with an application running on the first device. The options may include a list of contacts in an agenda-type arrangement (e.g., an agenda), a list of groups, with each group containing one or more contacts, one or more tabs and/or buttons associated with one or more functionalities that can be performed via the application, and/or any combinations of the above. The options could be shown by the User Interface ("UI") associated with the application. One of the options could be, for example, the option to send a short multimedia content, such as a recorded audio file, to one or more recipient (e.g., "SHOUT" option).

At 101-a, the first user selects (e.g., by clicking) the "agenda" tab/option within the application. By "selecting" it is intended any act that allows the user to select the option. For example, it may include clicking on a key associated with the option, clicking on the screen (e.g., if the user device is a touchscreen), using a voice command, and /or any other means of selecting. At 102-a, the first user goes into his contacts (e.g., by browsing the agenda on the first user device), searches among his contacts and select the contacts (e.g., the one or more recipients) he wishes to send the content to. The application may automatically present, upon the user selecting the "SHOUT" option, a link, an interface or similar to access the agenda into his phone. Other variants could also be included, and are still within the scope of the invention. Alternatively, at 101-b the first user selects (e.g., by clicking) the "group" tab/option within the application, then, at 102-b, the first user goes into his groups (e.g., by browsing the "group" tab/option), searches among the various groups and select the one or more group he wishes to send the content to. The application may automatically present, upon the user selecting the "SHOUT" option, a link, an interface or similar to access the agenda or to the group tab into the first device.

At step 103, the first user selects (e.g., by clicking/pressing) the option "SHOUT" (or equivalent). For example, this option could be presented in the form of a "button" to be clicked, but other ways of presenting it are also within the scope of the invention. This selection would trigger the procedure for sending the content to the recipients. This step could be done before or after steps 101 and 102, whichever is the preferred way, without substantially changing/altering the procedure.

At 104, the user clicks on a "microphone" option (e.g., a button visually representing a microphone or similar) to start recording an audio file (e.g., a recording). Alternatively, the option could be a "video" option (e.g., a button visually representing a camera, a video camera, a movie or similar) to start recoding a video file. Other forms of audio and/or visual recording or multimedia recording in general, are within the scope of the invention, and can be performed by selecting the appropriate button. The recording can be done by holding the button for the duration of the recording, and/or in any other suitable manner. The recording can even be triggered automatically, for example once the user has selected the "SHOUT" option.

At 105 the user may confirm that he/she is actually intending to deliver the recording (e.g., content) to the selected recipients. In an alternative, it may be that it is after step 104 or step 105 that the user selects the recipients (i.e., it performs steps 101 and 102).

At 106, the application uploads the content/recording into the network (e.g., at the server and/or at a storage device associated with the server). This can be done using standard procedures for transferring files. Also, delivery of the content is triggered (for example, automatically when the upload is initiated, or separately by the application and/or the server).

At 107, the server may check whether the selected recipients against a set of delivery rules, for example to confirm whether the recipient is allowed to receive content, whether the user is allowed to send the content to the recipient, etc. One of this check may include verifying whether the one or more selected recipients, or equivalently the one or more recipients within the one or more selected groups, (hereafter, "selected recipients") is/are associated with a community which the first user belongs to or is associated with. In addition or in alternative, the server may verify whether the selected recipients and/or the sender have a specific active tariff (e.g., a tariff associated with the community) and, based on that, enable delivery of the content to the selected recipients using a specific method of delivery. The server may determine to which group the selected recipients and/or the sender are associated with. The determination may be performed by verifying the active tariff for the selected recipients and/or the sender. Depending on these checks, the server may decide the way of delivering the content to the respective recipient - for example, by a call (e.g., a terminating call) and/or a message (see steps below).

At 108-a, if a recipient of the selected recipients belongs to or is associated with the same (or a related) community which the sender belongs to or is associated with, then the server triggers a call to the recipient, for example, a terminating call. The call can be a Circuit Switched (CS) call. A terminating call is usually an outbound call that "terminates" to a recipient of said call, for example from the network (e.g., from the server and/or any other element of the network) to the recipient of said call. The server may generate a SIP call which is then routed into the CS domain (e.g., "converted" into a CS call). For example, this can be done either via prefix or via a route header. A message containing a link for obtaining the content (e.g., downloading) could also be sent in addition to the call. At 109-a, when the user of the recipient device picks up (e.g., answers or otherwise accepts) the call, the content will be automatically played. For example, if the content is an audio recording, then the audio will be played to the recipient. Alternatively, if the content is a video recording, then the video may be automatically shown on the recipient device (e.g., when the user picks up the call - which can be a video call - a video application will be automatically triggered and the video played). In addition, if the content is some other form of multimedia file, then a corresponding application that allows playback of the multimedia file may be triggered once the user accepts the call (which, in this case, could be a multimedia call).

At 108-b, if a recipient of the selected recipients does not belong to or is not associated with the same (or a related) community which the sender belongs to or is associated with, then the server triggers a message to be sent to the recipient. The message contains a link for obtaining the content (e.g., downloading) could also be sent in addition to the call. At 109-b, the user of the recipient device may select the link (e.g., by clicking) and then obtain the content for local playback or playback the content directly from the remote storage (e.g., by streaming).

At 110, the first device may receive information about the status of the delivery of the content, for example whether the content has been successfully delivered, at what time, which recipient has obtained the content, etc.

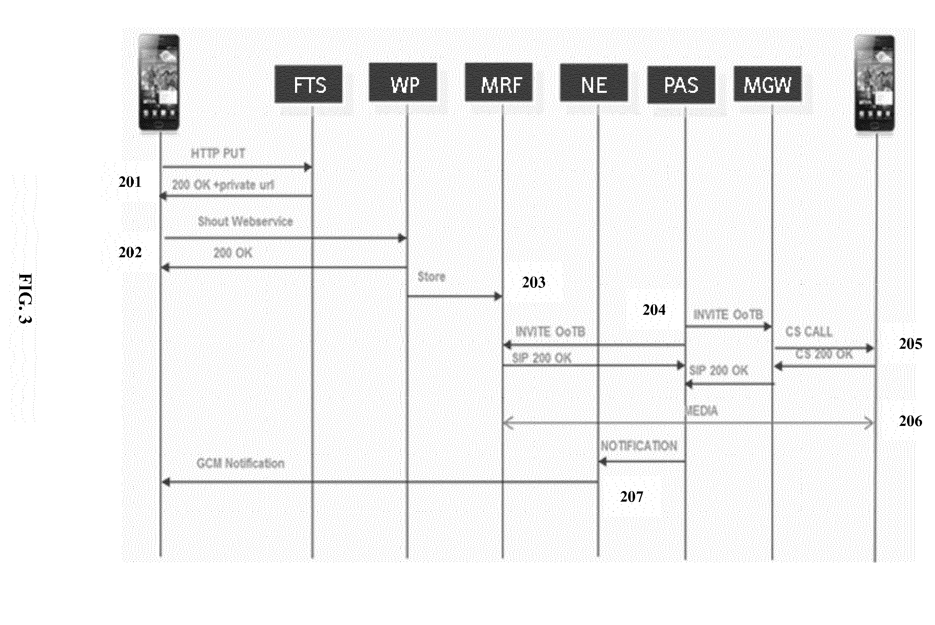

Figure 3 shows an exemplary flow diagram for facilitating delivery of content over a telecommunication network. There are various components mentioned here, for which a brief explanation is provided. The File Transfer Server (FTS) is a node responsible for storing the audio file. This platform receives the file in one or more chunks, and when the sanity check is complete, returns a private url pointing to the stored file. The WP (Web Proxy) is a standard proxy whose function is to link layer 1 services (public IP) with layer 2 servers (not reachable from the open internet). It also provides authentication and authorization. The Media Resource Function (MRF) is a standard node responsible for providing media features in IMS (further described above). The Notification Engine (NE) provides a standardized interface to several notification engines, for example SMS, GCM (Google™ Cloud Messaging) or APNS (Apple™ Push Notification System). The Policy Application Server (PAS) provides the service logic related to the terminating functionality. For example, it checks whether the recipients are allowed to receive an OoTB or not, based on defined preconditions (e.g., the user has purchased a determined voice plan). Finally, the Media Gateway (MGW) provides interconnection with the CS domain. A part or all of the above components may be logical entities inside the SHOUT Application Server.

At 201, the first device (e.g., via a client application) uploads the content to FTS using the HTTP PUT signalling. A response (200 OK + private url) is received back if the upload is successfully done, in other case, several error codes can be defined (i.e., 502 retry after, meaning the server is out of service momentarily). In this particular case, the FTS provides http authentication (based on username and cookie), but depending on the security requirements, a standard FTP can be used.

At 202, once the upload has been performed, the client application starts the SHOUT service by invoking an API. This is done by sending a SHOUT Webservice to the WP (including, amongst others, username, cookies, url of the file, recipients, etc.) and receiving a "200 OK" message back, meaning the Webservice has been accepted.

At 203, the content (e.g., a sound recording) is retrieved by WP and is pushed to the MRF for storage.

At 204, if the recipient matches some preconditions (e.g., some criteria), an out of the blue (OoTB) call is issued from PAS to each recipient (via "INVITE OoTB", the "CS call" from the MGW and a "200 OK"). The call is pointed to the content previously pushed to the MRF.

At 205, the PCAS stores the result for each call (e.g., "200 OK", or any error code received, for example a response for a busy tone, such as "486 Busy here") and applies the normal logic for a voice INVITE: if it receives a 200 OK, the call is connected, and if an error code is received, this terminating leg is closed (or otherwise dismissed). This step may be modified depending on the network setup and desired behaviour of the call. For example, a direct call could be used, without applying further logic. Alternatively, a prefix may be added and, if no further logic is to be executed (i.e. voice mail), a diversion header can be added with redirection-counter = 5. In this point, we can apply any external call control from the PAS server.

At 206, the content is exchanged if the call is answered with a "200 OK"-type message.

At 207, a summary of the result of the calls is sent back to the sender ("GCM Notification").

Several modifications could be applied to the procedure described in Figure 3 without departing from the scope of the invention.

Thus, specific embodiments of the invention have been described above. Nevertheless, the skilled person will contemplate various modifications, combinations and substitutions. In particular, the specific names are not always significant and elements with different names, but having the same effect may be alternatively used. Similarly, the skilled person will appreciate that other architectures over which the invention can be implemented are also possible.

## Claims

1. A method for facilitating delivery of content over a telecommunication network, the method comprising:
receiving content to be delivered from a first device associated with the network to at least one second device associated with the network; and
triggering by a server a call to the at least one second device, said call allowing the at least second device to obtain the content when the call is accepted at the at least second device.

2. The method of claim 1, further comprising:
uploading the content prior to delivery to the at least one second device.

3. The method of claim 2, wherein the content is uploaded at the server or at a storage entity associated with the server.

4. The method of claim 1, further comprising:
generating at the first device the content to be delivered to the at least one second device.

5. The method of claim 1, further comprising:
receiving from the first device an indication of the at least one second device to which the content is to be delivered.

6. The method of claim 5, wherein the indication is based on a selection by the user of the first device.

7. The method of claim 1, wherein the triggering is initiated only when the at least one second device belongs to or is associated with a community to which the first device belongs to or is associated with.

8. The method of claim 1, wherein the content is delivered to the at least one second device:
directly from the server; or
via the server; or
from a storage entity associated with the server.

9. The method of any of the above claims, wherein the content is a multimedia file.

10. A server for facilitating delivery of content over a telecommunication network, the server comprising:
means for receiving directly or indirectly content to be delivered from a first device associated with the network to at least one second device associated with the network;
means for triggering a call to the at least one second device, said call allowing the at least second device to obtain the content when the call is accepted at the at least second device.

11. A method for facilitating delivery of content over a telecommunication network, the method comprising:
receiving content to be delivered from a first device associated with the network to at least one second device associated with the network; and
selecting, based on
(i) whether the at least one second device and/or the user of the at least one second device is associated with a group which the first device and/or the user of the first device is associated with; and/or
(ii) whether the at least one second device and/or the user of the at least one second device and/or the first device and/or the user of the first device is associated with a specific active tariff,
a way of delivering the content to the at least one second device.

12. The method of claim 11, wherein, if the at least one second device and/or the user of the at least one second device is associated with a group which the first device and/or the user of the first device is associated with, the selected method for deliver is a call to the at least one second device.

13. A server for facilitating delivery of content over a telecommunication network, the server comprising:
means for receiving content to be delivered from a first device associated with the network to at least one second device associated with the network; and
means for selecting, based on
(i) whether the at least one second device and/or the user of the at least one second device is associated with a group which the first device and/or the user of the first device is associated with; and/or
(ii) whether the at least one second device and/or the user of the at least one second device and/or the first device and/or the user of the first device is associated with a specific active tariff,
a way of delivering the content to the at least one second device.

14. An application for facilitating delivery of content over a telecommunication network, the application configured to run at a first device associated with the network, the application for use with a server in accordance with claim 13 or 14, the application comprising:
means for selecting at least one second device associated with the network; and
means for initiating delivery of the content to the selected at least one second device.

15. The application of claim 14, further comprising:
means for generating, at the first device, the content to be delivered.
